(19) Europäisches Patentamt
European Patent Office
Office européen des brevets

(11) **EP 3 131 291 A1**

(12) **EUROPEAN PATENT APPLICATION**
published in accordance with Art. 153(4) EPC

(43) Date of publication:
**15.02.2017 Bulletin 2017/07**

(21) Application number: **15751310.2**

(22) Date of filing: **07.01.2015**

(51) Int Cl.:
**H04N 9/07** *(2006.01)*    **H04N 13/02** *(2006.01)*

(86) International application number:
**PCT/KR2015/000132**

(87) International publication number:
**WO 2015/126056 (27.08.2015 Gazette 2015/34)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **19.02.2014 KR 20140019252**

(71) Applicants:
• **Andong National University Industry Academic Cooperation Foundation**
**Andong-si, Gyeongsangbuk-do 760-749 (KR)**
• **4dculture Inc.**
**Daegu 704-948 (KR)**

(72) Inventors:
• **LEE, Cheol Hee**
**Daegu 706-915 (KR)**
• **KIM, Jong Seong**
**Andong-si**
**Gyeongsangbuk-do 760-863 (KR)**

(74) Representative: **Boult Wade Tennant**
**Verulam Gardens**
**70 Gray's Inn Road**
**London WC1X 8BT (GB)**

(54) **SYSTEM AND METHOD FOR ACQUIRING COLOR IMAGE FROM MONOCHROME SCAN CAMERA**

(57)    The present invention relates to a system and a method for acquiring a color image from a monochrome scan camera, and the system comprising: a projector for projecting an RGB color light source; a camera for photographing an object on which the RGB color light source is to be projected; and a color reproduction unit for acquiring a color image by normalizing the light intensity of the RGB color light source and adjusting a gain for each RGB channel using gain adjustment coefficients generated by calculating tristimulus values of the camera, and thus the present invention obtains an effect of reproducing 3D information and color information of an object by projecting the RGB color light source of the projector to acquire a plurality of images from the same scene and ascertaining the color information of the object inputted into the camera from the plurality of images.

[FIG. 2]

**Description**

**TECHNICAL FIELD**

The present invention relates to a color image capture system and method using a monochrome scanning camera, and more particularly, to a color image acquisition system and method for reproducing a color image having RGB channels using a monochrome scanning camera.

**BACKGROUND ART**

When precise shape information of an object is necessary, such as in 3D scanning, monochrome CCD cameras are normally used to reduce production cost and increase the resolution of the image.

Thus, when using a monochrome CCD camera, since the output value is not three channels per pixel like a color CCD camera, but one-dimensional, a black-and-white image is obtained instead of a color image.

There is no way to get an immediately multi-dimensional color image from a one-dimensional black and white image.

Therefore, in order to obtain a multi-dimensional color image from a one-dimensional image in black and white, it is necessary to obtain a value for each R, G, B channel under a white light source by using a filter or the like, and to combine them to create an image.

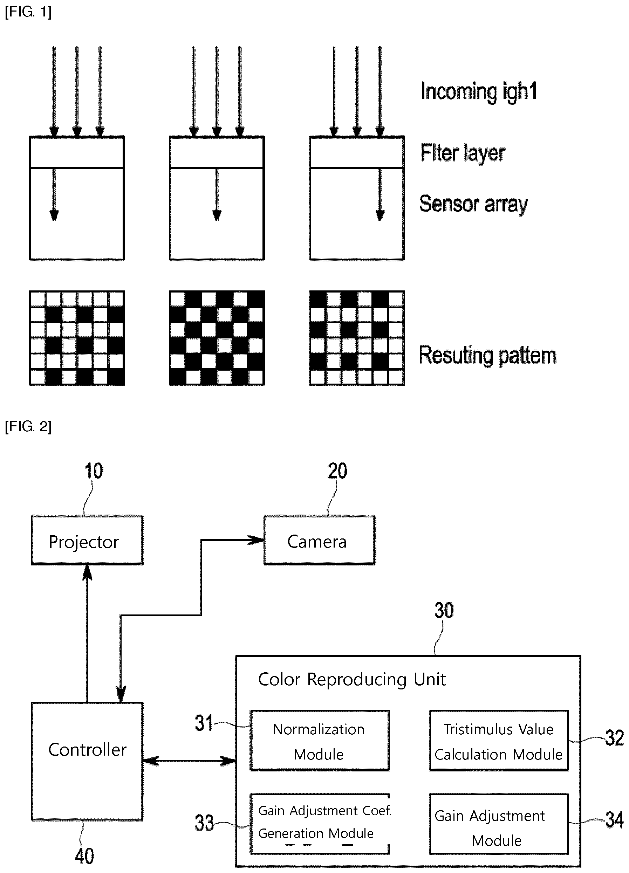

FIG. 1 is an exemplary diagram of a Bayer filter.

As shown in Figure 1, applying a thin film corresponding to an R, G, or B channel on one CCD or CMOS sensor to read reading the corresponding value for each pixel from the sensor. Since each pixel has a single channel value, the values of the other two channels are interpolated with the adjacent channels to reproduce the color information.

On the other hand, in order to obtain distance information from a 3D scanner, one projects a regular pattern using a projector on an object, takes a photograph of the image to acquire distortion information of the projected pattern from the image and to read the shape of the object.

Here, the shape of the object is read using a given full resolution of a black and white camera not applied with a Bayer filter in order to obtain a high resolution image.

In this way, when using a black-and-white camera not applied with a Bayer filter is to read the shape of an object with a given full resolution of the camera, because the output of the camera is one-dimensional, the color information of the object cannot be obtained directly from the camera's output.

That is, in the case of a 3D scanner, to get the highest resolution for a given camera, because a monochrome camera without a Bayer filter is used, a method for acquiring three or more channels from one channel value is required to get RGB color information

As such, a method for outputting color information per pixel can be considered, wherein the method comprises projecting light from a color light source corresponding with R, G, B, instead of reading a limited wavelength value through an R, G, B membrane; obtaining camera output from the light projection; and combining the camera outputs.

In general, however, because the spectral sensitivity of a camera is responsive to the entire spectral range of visible light, and a color light source has a plurality of ranges where the wavelengths overlap, it is difficult to obtain the values of R, G, B channels separately.

That is, the color image reproduction method according to the prior art is to obtain a light of a narrow wavelength range by diffracting the light from a white light source, and sets the intensity of the light source such that the magnitude of the value is opposite to the value of the spectral sensitivity of the camera in the wavelength range.

Accordingly, a color image reproduction method according to the prior art relates to estimating the spectral reflectance of an object by setting the output of the camera corresponding to the range by the spectral sensitivity of the object.

For example, the Korean Patent Registration No. 10-0585270 (published on May 30, 2006) and the Korean Patent Publication No. 10-2011-0006360 (published on January 20, 2011) disclose a structure of an apparatus for acquiring color information of a surface of an object.

**DETAILED DESCRIPTION OF THE INVENTION**

**TECHNICAL OBJECTS**

However, color image reproduction method according to the prior art requires apparatuses for diffracting white light source and synchronizing the light source and camera and the steps of acquiring 30 to 60 images using the apparatuses and combining these images through complicated calculation process.

As such, a color image reproduction method according to the prior art was not appropriate to apply to common 3D scanners.

To solve the problems described above, an object of the present invention is to provide a color image acquisition system and method using a monochrome scanning camera that acquires 3D information and color information of an object and using a multi-light source.

Another object of the present invention is to provide a system and method for acquiring a color image from a one-color scanning camera that combines a commercial CCD camera and a projector to reproduce a color image through a simple calculation process, wherein the CCD camera is a common 3D camera used to acquire image and depth information.

Still another object of the present invention is to provide a system and method for acquiring a color image from a monochrome scanning camera that can represent the color information for each pixel while making maximum resolution with a monochrome camera using a single color camera in 3D scanner applications.

## MEANS FOR ACHIEVING THE TECHNICAL OBJECT

In order to achieve the object described above, a color image acquisition system from a monochrome scanning camera according to the present invention comprises: a projector for projecting RGB colored light; a camera for taking a photograph of an object to which the RGB color light source is projected; and a color reproduction unit for normalizing the amount of RGB color light, and acquiring a color image by adjusting the gains per RGB channel using the gain control coefficient generated by calculating the tristimulus values of the camera.

The present invention further comprises a control unit for controlling the operation of the projector, camera, and the color reproduction unit using a pre-stored operating software program, wherein the control unit, when a scene is changed, controls the operation of the projector and camera in order to generate image data by taking multi-shots of a single scene using the RGB color peripheral light source of the projector.

The color reproduction unit comprises: a normalization module for normalizing the distribution of the intensity of RGB light and the intensity of RGB light projected from an RGB color light source with respect to the standard light source; a tristimulus value calculation module for calculating the tristimulus value of the camera for a full reflector at maximum intensity of light per RGB light; a gain adjustment coefficient generation module for generating gain adjustment coefficients using the ratios between the summed up XYZ values of the RGB light from the projector to the tristimulus value of the standard light source; and a gain adjustment module for adjusting the gains per RGB channel according to the generated gain adjustment coefficients.

The normalization module is characterized by normalizing the intensity of light of the RGB color light source of the projector using a coefficient that represents the ratio between the intensity of standard light and the sum of the intensity of the RGB light of the projector measured at a wavelength in the visible light bandwidth.

The tristimulus value calculation module is characterized in that it calculates the tristimulus values of the camera by integrating the spectral distribution of the light source per wavelength range, sensitivity of the camera and the color matching functions.

In addition, in order to achieve the objective described above, a color imaging method of a monochrome scanning camera according to the present invention comprises: (a) generating image data according to the standard light and RGB light by shooting the object while projecting RGB color light to the object; (b) normalizing the light intensity distribution and amount of light of the light projected from the RGB color light source for the standard source with the image data generated in step (a) above; (c) calculating the tristimulus value of the camera to a full reflector under the maximum amount of light per RGB color light sources; and (d) adjusting RGB channel gains by generating gain adjustment coefficients per RGB channel using the tristimulus value of the camera calculated in step (c) above.

Step (b) above is characterized by normalizing the intensity of the RGB color light source of the projector using the coefficient r which is the ratio between the sum of the RGB light intensity of the projector measured in the wavelength bandwidth of visible light and the intensity of the standard light, on the basis of Equation 1.

$$r = \frac{Y_{D65}}{0.290 \times R + 0.606 \times G + 0.105 \times B}$$

.[Equation 1]

$Y_{D65}$ is 100, R, G, and B are the maximum values of projector output, respectively, normalized between 0 to 100.

The step (c) above is characterized by calculating the tristimulus values of the camera by integrating the spectral distribution of the light source per wavelength range, sensitivity of the camera and the color matching functions.

Step (d) is characterized by comprising: (d1) generating RGB channel gain adjustment coefficients by substituting the tristimulus values of the standard light source in Equation; and (d2) adjusting the RGB channel gains using the RGB channel gain adjustment coefficient generated in step (d1).

In step (a) when the scene is changed, image data is generated by multi-shooting a single scene using the RGB color peripheral light source of the projector, and in step (d2), RGB color image by pixel is acquired by adjusting the RGB channel gains with the RGB channel output images of the monochrome scanning camera multiplied by the gain adjustment coefficient.

## EFFECT OF THE INVENTION

As described above, according to the color image capture system and method for a monochrome scanning camera in accordance with the present invention, a plurality of images is acquired from a same scene bv projecting RGB color light with a projector find out the color information input in the camera thereby, thus enabling the reproduction of 3D information and color information of an object can be obtained.

That is, according to the present invention, surface color information of an object can be obtained by projecting RGB color light using a projector used in a 3D scanner for obtaining a precise high-resolution 3D.

Accordingly, according to the present invention, accuracy can be improved by maximum utilization of the resolution of monochrome scanning camera, and at the same time, by reproducing precise color information of an object, the color reproducing performance of a conventional 3D scanner of a spatial encoding type using pattern light can be improved.

## BRIEF DESCRIPTION OF THE DRAWING

FIG. 1 is an exemplary diagram of a Bayer filter.

FIG. 2 is a block diagram of a color image capturing system in a monochrome scanning camera according to a preferred embodiment of the present invention.

FIG. 3 is an illustrative, perspective diagram of a color image capturing system shown in Figure 2.

FIG. 4 is a flow chart illustrating a step-by-step color imaging method of a monochrome scanning camera according to a preferred embodiment of the invention.

FIG. 5 is an exemplary view illustrating a result of obtaining an image of an object.

## MODE FOR CARRYING OUT THE INVENTION

With reference to the accompanying drawings, a color image capture system and method for a monochrome scanning camera according to a preferred embodiment of the present invention will be described in detail.

FIG. 2 is a block diagram of a color image capturing system with a monochrome scanning camera according to a preferred embodiment of the present invention.

A color image capture system in monochrome scanning camera according to the present invention acquires a color image by acquiring RGB signals per pixel in the image data generated with a monochrome camera by projecting color lights from R, G, and B light sources, acquiring RGB values, and then acquiring color signals by combining three sheets of image data acquired therefrom.

In order to achieve the object described above, a color image acquisition system from a monochrome scanning camera according to the present invention comprises, as shown in FIG. 2: a projector 10 for projecting RGB colored light; a camera 20 for taking a photograph of an object to which the RGB color light source is projected; and a color reproduction unit 30 for normalizing the amount of RGB color light, and acquiring a color image by adjusting the gains per RGB channel using the gain control coefficient generated by calculating the tristimulus values of the camera 20.

In addition, a color image capture system using a monochrome scanning camera according to a preferred embodiment of the present invention can further comprise: a controller 40 for controlling the operation of the projector 10 and the camera 20 and the color reproducing 30 based on previously stored driving software programs.

The projector 10 can receive a control signal, that is, a VGA signal from the control unit 40 and project standard light and RGB light.

The standard light source is International Commission on Illumination (CIE) Standard Light D65 in a normal natural state

In this embodiment, a driver (not shown) for driving the camera projector 10 and camera 20 in response to a control signal from the controller 40 may further be included.

The drive is connected to the controller 40 via a USB cable in a communicable manner and transmits drive signals for driving the projector 10 and the camera 20 in response to the control signals from the controller 40.

The camera 20 is provided with a monochrome scanning camera, and the camera 20 can be provided with the drive unit inside.

The color reproduction unit 30 can comprise: a normalization module 31 for normalizing the distribution of the quantity of RGB light and the quantity of RGB light projected from an RGB color light source with respect to the standard light source; a tristimulus value calculation module 32 for calculating the tristimulus value of the camera 20 for a full reflector at maximum quantity of light per RGB light; a gain adjustment coefficient generation module 33 for generating gain adjustment coefficients using the ratios between the summed up XYZ values of the RGB light from the projector 10 to the tristimulus value of the standard light source; and a gain adjustment module 34 for adjusting the gains per RGB channel according to the generated gain adjustment coefficients.

Here, because the spectral distribution of the RGB color light projected from the projector 10 is different from that of an ideal RGB color light source, the normalization of the spectral distribution and light amount of the light source is needed.

Since the purpose of the present embodiment is to make the output of the camera 20 to be the maximum values of the respective channels for an ideal white patch under a D65 standard light source, theoretically, the intensity of the RGB color light source can be normalized using a coefficient r which is the ratio between the sum of the RGB light quantity of the projector 10 measured in the visible light spectrum range and the quantity of light of D65, expressed by Equation 1 below.

[Equation 1]

$$\frac{\int_{\lambda=400}^{\lambda=700} E_{D65}(\lambda)d\lambda}{\int_{\lambda=400}^{\lambda=700} E_R(\lambda)d\lambda + \int_{\lambda=400}^{\lambda=700} E_G(\lambda)d\lambda + \int_{\lambda=400}^{\lambda=700} E_B(\lambda)d\lambda}$$

$E(\lambda)$ is the spectral distribution of the light source, the subscript D65, R, G, B are each a standard light source D65, a Red, Green, Blue light source of a projector.

That is, when generating real image data, since the amount of light reaching the subject is reduced in proportion to the projection distance, the normalization module 31 of the color reproducing unit 30 calculates the coefficient between the quantity of RGB light of the projector 10 and the quantity of the standard D65 light source.

[Equation 2]

$$r = \frac{Y_{D65}}{0.290 \times R + 0.606 \times G + 0.105 \times B}$$

$Y_{D65}$ is 100, R, G, and B are the maximum values of projector output, respectively, normalized between 0 to 100.

The tristimulus value calculation module 32 can calculate the tristimulus values of the camera 20 to a full reflector under the maximum quantity of light by the RGB color light sources.

In more detail, under the full RGB power of the projector 10, the output of the signals reflected from a full reflector and entering the camera 20 can be expressed using Equation 3 to Equation 6 below.

[Equation 3]

$$X_R = K \int_{\lambda=400}^{\lambda=700} E_R(\lambda) \bullet S(\lambda) \bullet \bar{x}(\lambda)d\lambda$$

$$Y_R = K \int_{\lambda=400}^{\lambda=700} E_R(\lambda) \bullet S(\lambda) \bullet \bar{y}(\lambda)d\lambda$$

$$Z_R = K \int_{\lambda-400}^{\lambda=700} E_R(\lambda) \bullet S(\lambda) \bullet \bar{z}(\lambda)d\lambda$$

[Equation 4]

$$X_G = K \int_{\lambda=400}^{\lambda=700} E_G(\lambda) \bullet S(\lambda) \bullet \bar{x}(\lambda)d\lambda$$

$$Y_G = K \int_{\lambda=400}^{\lambda=700} E_G(\lambda) \bullet S(\lambda) \bullet \bar{y}(\lambda)d\lambda$$

$$Z_G = K \int_{\lambda-400}^{\lambda=700} E_G(\lambda) \bullet S(\lambda) \bullet \bar{z}(\lambda)d\lambda$$

[Equation 5]

$$X_B = K \int_{\lambda=400}^{\lambda=700} E_B(\lambda) \bullet S(\lambda) \bullet \bar{x}(\lambda)d\lambda$$

$$Y_B = K \int_{\lambda=400}^{\lambda=700} E_B(\lambda) \bullet S(\lambda) \bullet \bar{y}(\lambda)d\lambda$$

$$Z_B = K \int_{\lambda-400}^{\lambda=700} E_B(\lambda) \bullet S(\lambda) \bullet \bar{z}(\lambda)d\lambda$$

where

$$K = \frac{100}{\int_{\lambda=400}^{\lambda=700} E_{D65}(\lambda) \bullet \bar{y}(\lambda)d\lambda} \bullet \frac{1}{r}$$

[Equation 6]

$$X_P = X_R + X_G + X_B$$

$$Y_P = Y_R + Y_G + Y_B$$

$$Z_P = Z_R + Z_G + Z_B$$

In Equation 3 to Equation 5, $S(\lambda)$ is the spectral sensitivity of the camera, r is the coefficient between RGB light intensity of the projector and intensity of the standard light D65 calculated using Equation 2.

Therefore, $X_P$, $Y_P$, and $Z_P$ in Equation 6 are the tristimulus values of the outputs of the camera 20 for an ideal white in a state in which R, G, and B lamps of the projector 10 are lit up at the same time.

Thus, it is possible for the tristimulus value calculation module 32 of the color reproducing module 30 to calculate the tristimulus values of the camera 20 by integrating the spectral distribution of the light source by the wavelength, the sensitivity of the camera 20 and the color matching functions.

The gain adjustment coefficient generation module 33 can generate gain adjustment coefficient by the ratio between the sum XYZ of the RGB light of the projector 10 for the tristimulus values of the standard light source.

For example, the gain adjustment coefficient generation module 33 can generate the RGB channel gain adjustment coefficients ($C_R$, $C_G$, $C_B$) by using the Equation 6 and the tristimulus values of a standard light source as shown in Equation 7.

[Equation 7]

$$C_R = \frac{X_{D65}}{X_P}$$

$$C_G = \frac{Y_{D65}}{Y_P}$$

$$C_B = \frac{Z_{D65}}{Z_P}$$

The gain control module 34 can adjust the RGB channel gains using the gain adjustment coefficient calculated in the gain adjustment coefficient generation module 33 as shown in Equation 8.

[Equation 8]

$$R = O_R \bullet C_R$$

$$G = O_G \bullet C_G$$

$$B = O_B \bullet C_B$$

$O_R$, $O_G$, and $O_B$ are images of the RGB channels of a monochrome scanning camera at scene change by projecting RGB color light of the projector sequentially, and $C_R$, $C_G$, and $C_B$ are the gain adjustment coefficients obtained in each RGB channel obtained with Equation 7.

Thus, the color reproducing unit 30, if there is a scene change, after adjusting the gain by using the equation 8, can obtain a color image for each of the RGB pixels.

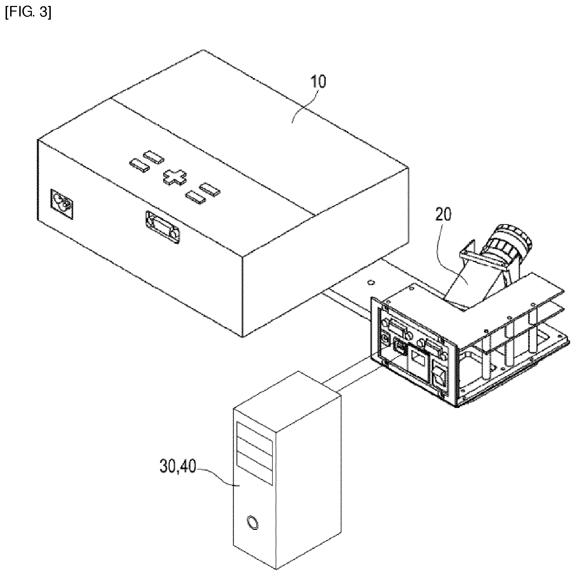

FIG. 3 is an illustrative, perspective diagram of a color image capturing system shown in Figure 2.

As shown in FIG. 3, the color reproducing unit 30 and the controller 40 may be provided as a computer terminal.

The color reproducing unit 30 can transmit a driving signal to the projector 10 so as to scan the standard light and RGB light in response to a control signal from the controller 40, and can transmit a driving signal in a trigger signal type to the camera 20 to take a photograph of the object to generate image data.

The controller 40 is provided as a computer terminal, wherein the computer terminal can comprise a storage unit (not shown) for storing operating program for driving the color reproducing unit 30 and the color image obtained in the and the color reproducing unit 30; an input unit (not shown) for inputting operation commands; and a display unit (not shown) for displaying the color images obtained by the color reproducing unit 30 and the operating condition of the color image acquisition system.

The controller 40, if the scene is changed, can control the operation of the projector 10 and the camera 20 to generate image data by multi-shooting a single scene using the RGB color peripheral light sources of the projector 10.

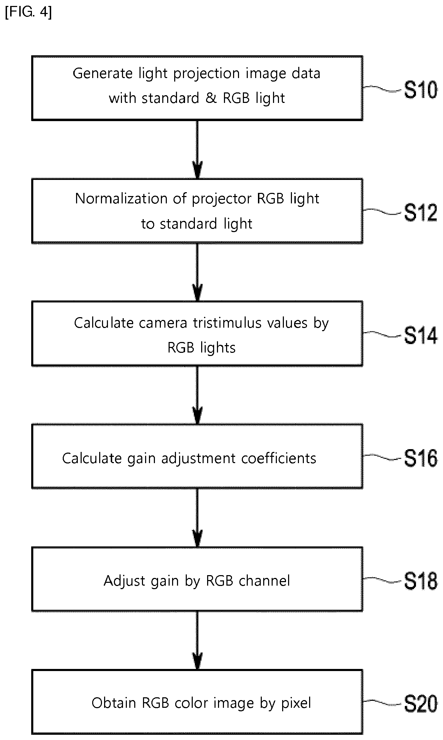

Referring to FIG. 4, the method for acquiring a color images with a monochrome scanning camera according to a preferred embodiment of the present invention is described in further detail below.

FIG. 4 is a flow chart illustrating a step-by-step color imaging method of a monochrome scanning camera according to a preferred embodiment of the invention.

In Step S10 of FIG. 4, the controller 40 controls the operation off the projector 10 and camera 20 to shoot the object in a state of projecting the RGB color light to the object to generate image data according to the standard light and RGB light.

The controller 40, if the scene is changed, can control the operation of the projector 10 and the camera 20 to generate image data by taking multiple shots of a single scene using the RGB color peripheral light sources of the projector 10.

The normalization module 31 of the color reproducing unit 30 normalizes the light intensity distribution and amount of light projected from the RGB color light source for the standard light source (S12).

In this case, the normalization module 31 can normalize the intensity of the RGB color light using a coefficient r which is the ratio between the sum of the RGB light quantity of the projector 10 measured in the visible light spectrum range and the quantity of light of D65, expressed by Equation 1 below.

And the tristimulus value calculation module 32 calculates the tristimulus values of the camera 20 to a full reflector under the maximum quantity of light of the RGB color light sources (S14).

At this time, the tristimulus value calculation module 32 can calculate the tristimulus values of the camera 20 by integrating the spectral distribution of the light source, the sensitivity of the camera 20 and the color matching functions for each wavelength as shown in Equation 3 to Equation 6, and expressing the output of the camera to the ideal white in the tristimulus values under the condition that the R, G, and B lamps are turned on simultaneously.

Then, the gain adjustment coefficient generation module 33 can generate adjustment coefficients (CR, CG, CB) by channel using the tristimulus values of standard light source, as expressed in Equation 7 (S16).

Then, the gain adjustment module 34 controls the RGB channel gain using the RGB channel gain adjustment coefficients generated in the step S16 (S18).

Here, the gain control module 34, as expressed in Equation 8, can adjust the RGB channel gains, if there is a scene change, by projecting the RGB color lights of the projector 10 sequentially and the product of the RGB channel output images obtained with the monochrome scanning camera and the gain adjustment coefficient.

Accordingly, the color reproducing unit 30 obtains RGB color image for each and every pixel whose gain has been adjusted (S20).

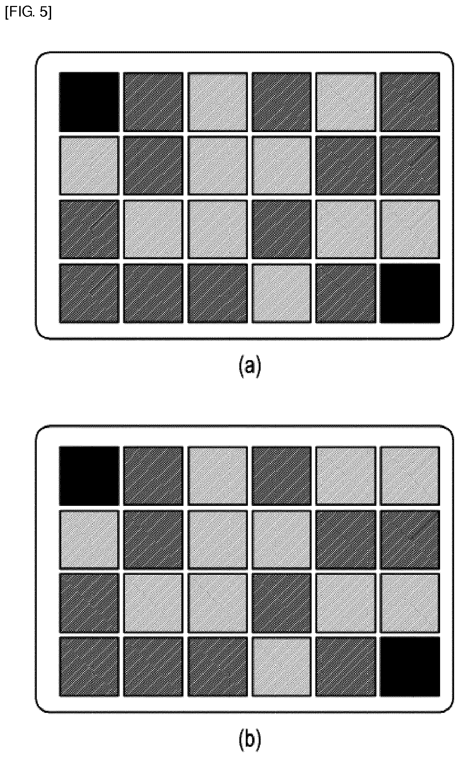

FIG. 5 is an exemplary view illustrating a result of obtaining an image of an object.

FIG. 5(a) shows a resultant image of a simple combination of the RGB image of the projector, and FIG. 5(b) shows a resultant image acquired by the color image acquisition system and method using a monochrome scanning camera in accordance with an embodiment of the present invention.

Through the process described above, it could be verified that the resultant image acquired with a monochrome scanning camera in accordance with an embodiment of the present invention can reproduce the color information of an object more precisely than the resultant image acquired by simple combination of the RGB images of a project.

According to the present invention, surface color information of an object can be obtained by projecting RGB color light using a projector used in a 3D scanner for obtaining a precise high-resolution 3D.

In the above description, it would be apparent that the scope of the right of the present invention is not limited to the embodiment described above and accompanying drawings, and that any person skilled in the art can implement the present invention in various ways within the scope of the rights stated in the claims.

## INDUSTRIAL APPLICABILITY OF THE PRESENT INVENTION

The present invention can be used to obtain a plurality of images from the same scene, by projecting the RGB color lights of a projector, and from which color information of the object inputted in the camera is obtained, to reproduce a 3D information and color information of an object.

## Claims

1. A system for acquiring a color image from a monochrome scanning camera, comprising: a projector for projecting RGB color lights; and a color reproducing unit for acquiring a color image by normalizing the quantities of lights from a camera shooting the object of the RGB color light projection and the RGB color light, and adjusting the RGB channel gains using the gain adjustment coefficients generated by calculating the tristimulus value of the camera.

2. The system for acquiring a color image from a monochrome scanning camera of claim 1, further comprising: a controller for controlling the operation of the projector, camera, and color reproducing unit according to the pre-stored operation software program; wherein the controller, if there is a scene change, controls the projector and camera so that the camera can generate image data by multi-shooting a same scene using the RGB color peripheral light sources of the projector.

3. The system for acquiring a color image from a monochrome scanning camera of claim 1 or claim 2, wherein the color reproducing unit comprises: a normalization module for normalizing the distribution of the light intensity and amount of light of the RGB lights projected from the RGB color light sources to a standard light source; a tristimulus value calculation module for calculating the tristimulus value of the camera to a full reflector under the respective maximum intensities to the RGB lights; a gain adjustment coefficient generation module for generating gain adjustment coefficients by the ratio between the sum XYZ of the RGB light of the projector for the tristimulus values of the standard light source; and a gain control module for controlling the RGB channel gains according to the generated gain adjustment coefficients.

4. The system for acquiring a color image from a monochrome scanning camera of claim 3, wherein the normalization module is **characterized by** normalizing the intensity of light of the RGB color light source of the projector using a coefficient that represents the ratio between the intensity of standard light and the sum of the intensity of the RGB light of the projector measured at a wavelength in the visible light bandwidth.

5. The system for acquiring a color image from a monochrome scanning camera of claim 3, wherein the tristimulus value calculation module is **characterized in that** it calculates the tristimulus values of the camera by integrating the spectral distribution of the light source per wavelength range, sensitivity of the camera, and the color matching functions.

6. A method for acquiring a color image from a monochrome scanning camera, comprising the steps of:

(a) generating image data of standard and RGB lights by shooting an object which is being projected with RGB color lights; (b) normalizing the light intensity distribution and amount of light projected from the RGB color light source to a standard light source in the image data generated in step (a); (c) calculating tristimulus value of the camera to a full reflector under the maximum light intensities of the RGB color lights; and (d) adjusting RGB channel gains by generating RGB channel gain adjustment coefficients using the tristimulus values calculated in step (c).

7. The method for acquiring a color image from a monochrome scanning camera of claim 6, wherein step (b) above is **characterized by** normalizing the intensity of the RGB color light source of the projector using the coefficient r, which is the ratio between the sum of the RGB light intensity of the projector measured in the wavelength bandwidth of visible light and the intensity of the standard light, on the basis of Equation 1:

$$r = \frac{Y_{D65}}{0.290 \times R + 0.606 \times G + 0.105 \times B}$$

.[Equation 1]

$Y_{D65}$ is 100; R, G, and B are the maximum values of projector output, respectively, normalized between 0 to 100.

8. The method for acquiring a color image from a monochrome scanning camera of claim 7, wherein step (c) calculates the tristimulus value by integrating the spectral distribution of the light source per wavelength range, sensitivity of the camera, and the color matching functions.

9. The method for acquiring a color image from a monochrome scanning camera of claim 8, wherein step (d) is **characterized by** comprising: (d1) generating RGB channel gain adjustment coefficients by substituting the tristimulus values of the standard light source in Equation 2; and (d2) adjusting the RGB channel gains using the RGB channel gain adjustment coefficient generated in step (d1).

10. The method for acquiring a color image from a monochrome scanning camera of claim 9, wherein step (a) when the scene is changed, image data is generated by taking multiple shots of a single scene using the RGB color peripheral light source of the projector, and in step (d2), RGB color image by pixel is acquired by adjusting the RGB channel gains with the RGB channel output images of the monochrome scanning camera multiplied by the gain adjustment coefficient.

[FIG. 1]

Incoming igh1

Fiter layer

Sensor array

Resuting pattem

[FIG. 2]

10

20

Projector

Camera

30

Color Reproducing Unit

31

Normalization
Module

Tristimulus Value
Calculation Module

32

Controller

33

Gain Adjustment Coef.
Generation Module

Gain Adjustment
Module

34

40

[FIG. 3]

[FIG. 4]

```
┌─────────────────────────────────┐
│   Generate light projection image data  │
│        with standard & RGB light        │ ─── S10
└─────────────────────────────────┘
                  │
                  ▼
┌─────────────────────────────────┐
│    Normalization of projector RGB light  │
│             to standard light            │ ─── S12
└─────────────────────────────────┘
                  │
                  ▼
┌─────────────────────────────────┐
│   Calculate camera tristimulus values by │
│                RGB lights                │ ─── S14
└─────────────────────────────────┘
                  │
                  ▼
┌─────────────────────────────────┐
│      Calculate gain adjustment coefficients │ ─── S16
└─────────────────────────────────┘
                  │
                  ▼
┌─────────────────────────────────┐
│          Adjust gain by RGB channel      │ ─── S18
└─────────────────────────────────┘
                  │
                  ▼
┌─────────────────────────────────┐
│         Obtain RGB color image by pixel  │ ─── S20
└─────────────────────────────────┘
```

[FIG. 5]

(a)

(b)

| INTERNATIONAL SEARCH REPORT | International application No. |
| --- | --- |
| | **PCT/KR2015/000132** |

**A. CLASSIFICATION OF SUBJECT MATTER**

*H04N 9/07(2006.01)i, H04N 13/02(2006.01)i*

According to International Patent Classification (IPC) or to both national classification and IPC

**B. FIELDS SEARCHED**

Minimum documentation searched (classification system followed by classification symbols)
H04N 9/07; G06T 13/40; G09G 3/36; G01B 11/24; H04N 13/02; G06T 15/00; G09G 3/20; G06T 7/00; G06T 13/00

Documentation searched other than minimum documentation to the extent that such documents are included in the fields searched
Korean Utility models and applications for Utility models: IPC as above
Japanese Utility models and applications for Utility models: IPC as above

Electronic data base consulted during the international search (name of data base and, where practicable, search terms used)
eKOMPASS (KIPO internal) & Keywords: RGB, light source, camera, image, benefit, adjustment

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2007-0024185 A (SAMSUNG ELECTRONICS CO., LTD.) 02 March 2007<br>See paragraphs [0074]-[0081], [0093]-[0126]; claims 13-14, 18; and figures 6-7, 10-13. | 1-10 |
| Y | KR 10-2009-0122216 A (PARK, Jong - Il et al.) 26 November 2009<br>See paragraphs [0009]-[0023]; claims 1, 9; and figures 1-10, 20. | 1-10 |
| A | KR 10-2012-0113005 A (MACROGRAPH CO., LTD.) 12 October 2012<br>See paragraphs [0023]-[0047]; and figures 1-4. | 1-10 |
| A | KR 10-2012-0010469 A (DYNE DIGICULTURE CO., LTD. et al.) 03 February 2012<br>See paragraphs [0019]-[0027]; and figure 1. | 1-10 |
| A | US 2012-0075425 A1 (THIEL, Frank) 29 March 2012<br>See paragraphs [0012]-[0072]; and figure 1. | 1-10 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 19 MARCH 2015 (19.03.2015) | **20 MARCH 2015 (20.03.2015)** |

| Name and mailing address of the ISA/**KR** | Authorized officer |
| --- | --- |
| Korean Intellectual Property Office<br>Government Complex-Daejeon, 189 Seonsa-ro, Daejeon 302-701,<br>Republic of Korea | |
| Facsimile No. 82-42-472-7140 | Telephone No. |

Form PCT/ISA/210 (second sheet) (July 2009)

INTERNATIONAL SEARCH REPORT
Information on patent family members

International application No.

**PCT/KR2015/000132**

| Patent document cited in search report | Publication date | Patent family member | Publication date |
|---|---|---|---|
| KR 10-2007-0024185 A | 02/03/2007 | KR 10-0755676 B1 | 05/09/2007 |
| | | US 2007-0047808 A1 | 01/03/2007 |
| | | US 2012-0169797 A1 | 05/07/2012 |
| | | US 2014-0002511 A1 | 02/01/2014 |
| | | US 8625894 B2 | 07/01/2014 |
| KR 10-2009-0122216 A | 26/11/2009 | JP 2010-517460 A | 20/05/2010 |
| | | KR 10-1031932 B1 | 29/04/2011 |
| | | US 2010-0073504 A1 | 25/03/2010 |
| | | US 8284279 B2 | 09/10/2012 |
| | | WO 2008-093988 A1 | 07/08/2008 |
| KR 10-2012-0113005 A | 12/10/2012 | KR 10-1250919 B1 | 04/04/2013 |
| KR 10-2012-0010469 A | 03/02/2012 | KR 10-1219778 B1 | 05/02/2013 |
| US 2012-0075425 A1 | 29/03/2012 | DE 102009001086 A1 | 02/09/2010 |
| | | DE 102009001086 B4 | 27/03/2014 |
| | | EP 2398379 A1 | 28/12/2011 |
| | | EP 2398379 B1 | 01/05/2013 |
| | | JP 2012-518445 A | 16/08/2012 |
| | | JP 5368587 B2 | 18/12/2013 |
| | | US 8577212 B2 | 05/11/2013 |
| | | WO 2010-094805 A1 | 26/08/2010 |

Form PCT/ISA/210 (patent family annex) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 100585270
- KR 1020110006360